# EUROPEAN PATENT SPECIFICATION

(11) **EP 1 526 051 B1**
(45) Date of publication and mention of the grant of the patent: **05.09.2007**
(21) Application number: 04104980.0
(22) Date of filing: 12.10.2004
(51) Int. Cl.: B60T 7/12, B60T 8/24, B60T 13/66

(54) **Method, arrangement and computer program for controlling a hill hold brake**
Verfahren, Anordnung und Computerprogramm zum Regeln einer Berghaltebremse
Procédé, dispositif et programme informatique pour commander un frein anti-recul

(30) Priority: 23.10.2003 SE 3027844
(43) Date of publication of application: 27.04.2005
(73) Proprietor: Scania CV AB (PUBL), 151 87 Södertälje (SE)
(72) Inventor: Mårtensson, Max, 641 90 Katrineholm (SE)

(56) References cited:
- EP-A- 0 507 466
- DE-A1- 10 248 813
- DE-A1- 19 949 203
- US-A- 6 056 373
- US-A1- 2003 137 192

## Description

### TECHNICAL FIELD

The invention relates generally to vehicles and more specifically to a method, an arrangement and a computer program for controlling a hill hold brake in a vehicle.

### BACKGROUND OF THE INVENTION

The expression "hill hold brake" is used to designate all types of automatic temporary brakes in vehicles, i.a. bus stop brakes in buses that under certain driver-controlled conditions act on the brake cylinders of the vehicles with a reduced pressure at a temporary stop, e.g. a bus stop in connection with buses.

Today, if the vehicle is on a slope when the hill hold brake, i.e. today a brake function which is activated when the doors are opened, is deactivated after a temporary stop, the vehicle can unintentionally roll a little before the journey continues when the driver accelerates.

This can cause problems with vehicles in front of or behind the rolling vehicle. In a bus, this can also cause problems to passengers inside as well as outside the bus.

Thus, there is a need of a hill hold brake that is so secure that the vehicle does not unintentionally move before leaving a temporary stop.

In US 6 056 373 a system for controlling the braking action in a motor vehicle is described. A braking action is applied immediately in response to the recognition of a preselectable operating mode, in which at least the longitudinal velocity of the vehicle has been found to be zero. This can cause an abrupt braking. Documents US 2003/137192, DE 102 48 813, DE 199 49 203 and EP 0 507 466 all describe similar hill hold brakes.

Thus there is a need of smooth and not so abrupt braking in connection with a temporary stop.

### SUMMARY OF THE INVENTION

The object of the invention is to control a hill hold brake in a vehicle in such a manner that unintentional movements of the vehicle on a slope are avoided and that the braking of the vehicle in connection with a temporary stop is smooth and not so abrupt.

This is attained by the method according to the invention for controlling a hill hold brake in a vehicle by sensing vehicle speed, rpm of output axle of vehicle gear box, vehicle braking pressure, and vehicle accelerator pedal position, activating the hill hold brake in response to that the speed is equal to a predetermined speed, that the rpm is equal to a predetermined rpm, that the braking pressure is equal to a predetermined braking pressure, and that the accelerator pedal is inactive, and releasing the hill hold brake in response to that the accelerator pedal is activated, and activating the hill hold brake is after a predetermined delay.

This object is also attained by the arrangement according to the invention for controlling a hill hold brake in a vehicle, in that the vehicle is provided with a first sensor for sensing vehicle speed, a second sensor for sensing rpm of the output axle of the vehicle gear box, a third sensor for sensing braking pressure, and a fourth sensor for sensing accelerator pedal position, and that the sensors are connected to a control unit that is adapted to activate the hill hold brake in response to that the speed is equal to a predetermined speed, the rpm is equal to a predetermined rpm, the braking pressure is equal to a predetermined braking pressure, and the accelerator pedal is inactive, and to release the hill hold brake in response to activation of the accelerator pedal, and the control unit is adapted to activate the hill hold brake after a predetermined delay.

Hereby, it is secured that the vehicle does not move until the driver activates the accelerator pedal to continue the journey after a temporary stop.

Preferably, the control unit activates the hill hold brake after a predetermined delay.

Hereby, it is secured that the braking of the vehicle in connection with a temporary stop is smooth and not so abrupt.

According to the invention, the vehicle is provided with a fifth sensor for sensing ignition switch position, that is connected to the control unit that is adapted to keep the hill hold brake activated in response to switch off of the ignition switch.

Hereby, it is secured that the hill hold brake is kept activated even if the ignition switch unintentionally should be switched off during a temporary stop.

### BRIEF DESCRIPTION OF THE DRAWING

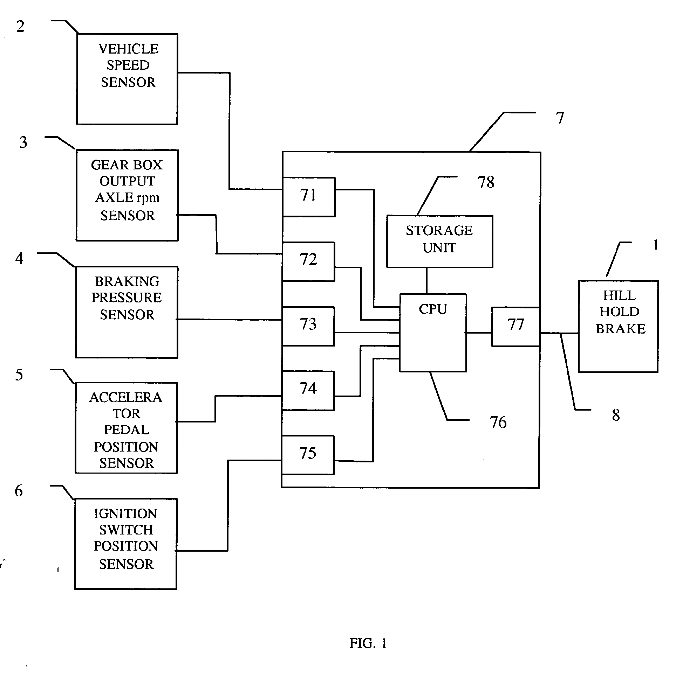

The invention will be described more in detail below with reference to the appended drawing on which Fig. 1 is a schematic illustration of an embodiment of an arrangement according to the invention for controlling a hill hold brake in a vehicle.

### DESCRIPTION OF THE INVENTION

Fig. 1 is a schematic illustration of an embodiment of an arrangement according to the invention for controlling an automatic hill hold brake 1 in a vehicle.

In accordance with the invention, the vehicle is provided with a sensor 2 for sensing speed of the vehicle, a sensor 3 for sensing rpm (rotations per minute) of the output axle of the gear box of the vehicle, a sensor 4 for sensing braking pressure, a sensor 5 for sensing accelerator pedal position, and a sensor 6 for sensing ignition switch position.

The sensors 2, 3, 4, 5 and 6 generate output signals on their respective output terminals that in accordance with the invention are connected to input ports 71, 72, 73, 74 and 75, respectively, of a control unit 7.

The control unit 7 comprises a central processing unit (CPU) 76 that is connected via separate buses to the respective input port 71, 72, 73, 74 and 75, and to an output port 77 that in its turn is connected to a control input terminal 8 of the hill hold brake 1.

The CPU 76 is also connected via a bus to a storage unit 78 in which a computer program in accordance with the invention is installed and in which limit values for the output signals of the sensors 2, 3, 4, 5 and 6 are set.

The CPU 76 monitors the values of the output signals from the sensors 2, 3, 4, 5 and 6 with respect to the limit values set in the storage unit 78.

In accordance with the invention, the CPU 76 is adapted to detect that
- the speed of the vehicle, as sensed by the sensor 2, is = a predetermined speed, e.g. 5 km/h, as set in the storage unit 78,
- the rpm of the output axle of the gear box, as sensed by the sensor 3, is = a predetermined rpm, e.g. 40 rpm, as set in the storage unit 78,
- the braking pressure, as sensed by the sensor 4, is = a predetermined braking pressure, e.g. 0.8 bar, as set in the storage unit 78, and
- the accelerator pedal is inactive, as sensed by the sensor 5.

In response to that all of the above conditions are fulfilled, the CPU 76 is adapted to generate an output signal to the output port 77 to activate the hill hold brake 1.

To make the activation of the hill hold brake 1 smooth and not so abrupt, the CPU 76 is adapted to perform the activation after a predetermined delay of e.g. 1.1 s.

Activation of the hill hold brake 1 results in an increase of the braking pressure. This braking pressure increase is sensed by the braking pressure sensor 4 whereby a holding circuit for the hill hold brake 1 is formed to secure that the vehicle does not move unintentionally.

Should the ignition switch for some reason be switched off more or less unintentionally during a temporary stop, i.e. the power supply of the vehicle would be switched off, the output signal from the CPU 76 to the output port 77 would cease due to the fact that no output signals would be generated by the sensors 2, 3, 4 and 5 to the CPU 76.

Thus, the output signal from the control unit 7 to the control input terminal 8 of the hill hold brake 1 would cease. This would cause the hill hold brake 1 to be unintentionally released which of course could be fatal.

To avoid such a situation, the CPU 76 is adapted to generate an output signal to the output port 77 should the ignition switch be switched off as sensed by the sensor 6.

Thus, an output signal would still appear from the control unit 7 to the control input terminal 8 of the hill hold brake 1 to keep the hill hold brake 1 activated.

Consequently, the hill hold brake 1 will still be activated even if the ignition switch is switched off.

In accordance with the invention, the hill hold brake 1 is adapted to be released when the driver activates the accelerator pedal to continue the journey after a temporary stop.

Activation of the accelerator pedal is sensed by the sensor 5 causing it to stop generating its output signal to the input port 74 of the control unit 7. This will cause the output signal from the CPU 76 to the output port 77 to cease. Hereby, when there is no output signal from the output port 77 to the control input terminal 8 of the hill hold brake 1, the hill hold brake 1 will be released.

As should be apparent from the above, by means of the arrangement according to the invention a secure hill hold brake is obtained in that the vehicle cannot move until the accelerator pedal is operated by the driver. Also, the vehicle cannot move even if the ignition switch is switched off unintentionally during a temporary stop.

## Claims

1. A method of controlling a hill hold brake in a vehicle, comprising the steps that:
- sensing vehicle speed, rpm of output axle of vehicle gear box, vehicle braking pressure, and vehicle accelerator pedal position,
- activating the hill hold brake in response to that the speed is equal to a predetermined speed, that the rpm is equal to a predetermined rpm, that the braking pressure is equal to a predetermined braking pressure, and that the accelerator pedal is inactive, **characterized by** activating the hill hold brake after a predetermined delay.

2. The method according to claim 1 or 2, **characterized by** sensing vehicle ignition switch position, and keeping the hill hold brake activated in response to that the ignition switch is switched off.

3. The method according to any of claim 1-3 **characterized by** releasing the hill hold brake in response to that the accelerator pedal is activated.

4. An arrangement for controlling a hill hold brake (1) in a vehicle, that is provided with a first sensor (2) for sensing vehicle speed, a second sensor (3) for sensing rpm of the output axle of the vehicle gear box, a third sensor (4) for sensing braking pressure, and a fourth sensor (5) for sensing accelerator pedal position, and that the sensors (2, 3, 4, 5) are connected to a control unit (7) that is adapted to activate the hill hold brake (1) in response to that the speed is equal to a predetermined speed, the rpm is equal to a predetermined rpm, the braking pressure is equal to a predetermined braking pressure, and the accelerator pedal is inactive, **characterized in that** the control unit (7) is adapted to activate the hill hold brake (1) after a predetermined delay.

5. The arrangement according to claim 4, **characterized in that** the vehicle is provided with a fifth sensor (6) for sensing ignition switch position, and that the fifth sensor (6) is connected to the control unit (7) that is adapted to keep the hill hold brake (1) activated in response to switch off of the ignition switch.

6. The arrangement according to any of claim 4 or 5, **characterized in that** the control unit is adapted to release the hill hold brake in response to activation of the accelerator pedal.

7. A computer program for controlling a hill hold brake (1) in a vehicle, with a computer useable code means for causing a central processing unit (76) in the vehicle to sense vehicle speed, rpm of the output axle of the gear box, braking pressure, and accelerator pedal position, to activate the hill hold brake (1) in response to that the speed is equal to a predetermined speed, the rpm is equal to a predetermined rpm, the braking pressure is equal to a predetermined braking pressure, and the accelerator pedal is inactive **characterized by** the computer useable code means causing the central processing unit (76) to activate the hill hold brake (1) after a predetermined delay.

8. The computer program according to claim 7, **characterized by** the computer useable code means causing the central processing unit (76) in the vehicle to sense ignition switch position, and to keep the hill hold brake (1) activated in response to switch off of the ignition switch.

9. The computer program according to any of claim 7 or 8, **characterized by** the computer useable code means causing the central processing unit (76) in the vehicle to release the hill hold brake (1) in response to activation of the accelerator pedal.

## Patentansprüche

1. Verfahren zum Steuern einer Steigungsbremse (Hill Hold-Bremse) in einem Fahrzeug, umfassend die Schritte:
- Erfassen einer Fahrzeuggeschwindigkeit, einer Drehzahl der Ausgangswelle des Fahrzeugsgetriebes, eines Fahrzeugbremsdrucks und einer Fahrzeugbeschleunigerpedalposition,
- Aktivieren der Steigungsbremse (Hill Hold-Bremse) in Antwort darauf, dass die Geschwindigkeit gleich einer vorbestimmten Geschwindigkeit ist, dass die Drehzahl gleich einer vorbestimmten Drehzahl ist, dass der Bremsdruck gleich einem vorbestimmten Bremsdruck ist und dass das Beschleunigerpedal inaktiv ist,
**gekennzeichnet durch** Aktivieren der Steigungsbremse (Hill Hold-Bremse) nach einer bestimmten Verzögerung.

2. Verfahren nach Anspruch 1 oder 2, **gekennzeichnet durch** Erfassen der Fahrzeugzündungsschalterposition und Halten der Steigungsbremse (Hill Hold-Bremse) im aktivierten Zustand in Antwort darauf, dass der Zündschalter ausgeschaltet ist.

3. Verfahren nach einem der Ansprüche 1 bis 3, **gekennzeichnet durch** Freigeben der Steigungsbremse (Hill Hold-Bremse) in Antwort darauf, dass das Beschleunigerpedal aktiviert ist.

4. Anordnung zum Steuern einer Steigungsbremse (Hill Hold-Bremse) (1) in einem Fahrzeug, das mit einem ersten Sensor (2) zum Erfassen eine Fahrzeuggeschwindigkeit, einem zweiten Sensor (3) zum Erfassen einer Drehzahl der Ausgangswelle des Fahrzeuggetriebes, einem dritten Sensor (4) zum Erfassen eines Bremsdrucks und einem vierten Sensor (5) zum Erfassen einer Beschleunigerpedalposition versehen ist, und dass die Sensoren (2, 3, 4, 5) mit einer Steuereinheit (7) verbunden sind, die dazu ausgelegt ist, die Steigungsbremse (Hill Hold-Bremse) (1) in Antwort darauf zu aktivieren, dass die Geschwindigkeit gleich einer vorbestimmten Geschwindigkeit ist, die Drehzahl gleich einer vorbestimmten Drehzahl ist, der Bremsdruck gleich einem vorbestimmten Bremsdruck ist und das Beschleunigerpedal inaktiv ist,
**dadurch gekennzeichnet, dass** die Steuereinheit (7) dazu ausgelegt ist, die Steigungsbremse (Hill Hold-Bremse) (1) nach einer vorbestimmten Verzögerung zu aktivieren.

5. Anordnung nach Anspruch 4, **dadurch gekennzeichnet, dass** das Fahrzeug mit einem fünften Sensor (6) zum Erfassen einer Zündschalterposition versehen ist, und dass der fünfte Sensor (6) mit der Steuereinheit (7) verbunden ist, die dazu ausgelegt ist, die Steigungsbremse (Hill Hold-Bremse) in Antwort auf ein Ausschalten des Zündschalters aktiviert zu halten.

6. Anordnung nach einem der Ansprüche 4 oder 5, **dadurch gekennzeichnet, dass** die Steuereinheit dazu ausgelegt ist, die Steigungsbremse (Hill Hold-Bremse) in Antwort auf eine Aktivierung des Beschleunigerpedals freizugeben.

7. Computerprogramm zum Steuern einer Steigungsbremse (Hill Hold-Bremse) (1) in einem Fahrzeug, mit einem in einem Computer nutzbaren Codemittel zum Bewirken, dass eine zentrale Steuereinheit (76) in dem Fahrzeug eine Fahrzeuggeschwindigkeit, eine Drehzahl der Ausgangswelle des Getriebes, einen Bremsdruck und eine Beschleunigerpedalposition erfasst, um die Steigungsbremse (Hill Hold-Bremse) (1) in Antwort darauf zu aktivieren, dass die Geschwindigkeit gleich einer vorbestimmten Geschwindigkeit ist, dass die Drehzahl gleich einer vorbestimmten Drehzahl ist, dass der Bremsdruck gleich einem vorbestimmten Bremsdruck ist und dass das Beschleunigerpedal inaktiv ist, **dadurch gekennzeichnet dass** die von einem Computer nutzbaren Codemittel die zentrale Steuereinheit (76) dazu veranlassen, die Steigungsbremse (Hill Hold-Bremse) (1) nach einer vorbestimmten Verzögerung zu aktivieren.

8. Computerprogramm nach Anspruch 7, **dadurch gekennzeichnet, dass** die von einem Computer nutzbaren Codemittel die zentrale Steuereinheit (76) in dem Fahrzeug dazu veranlassen, die Zündschalterposition zu erfassen und die Steigungsbremse (Hill Hold-Bremse) (1) in Antwort auf ein Ausschalten des Zündschalters aktiviert zu lassen.

9. Computerprogramm nach einem der Ansprüche 7 oder 8, **dadurch gekennzeichnet, dass** die von einem Computer nutzbaren Codemittel die zentrale Steuereinheit (76) in dem Fahrzeug dazu veranlassen, die Steigungsbremse (Hill Hold-Bremse) (1) in Antwort auf eine Aktivierung des Beschleunigerpedals freizugeben.

## Revendications

1. Procédé pour commander un frein anti-recul dans un véhicule, comprenant les étapes de :
- détecter la vitesse du véhicule, la rotation par minute de l'arbre de sortie d'une boîte de vitesses de véhicule, la pression de freinage du véhicule et la position de la pédale d'accélérateur du véhicule,
- activer le frein anti-recul en réponse au fait que la vitesse est égale à une vitesse prédéterminée, que la rotation par minute est égale à une rotation par minute prédéterminée, que la pression de freinage est égale à une pression de freinage prédéterminée et que la pédale d'accélérateur est inactive, **caractérisé par** l'activation du frein anti-recul après un retard prédéterminé.

2. Procédé selon la revendication 1, **caractérisé par** la détection de la position du commutateur d'allumage du véhicule et le maintien du frein anti-recul activé en réponse au fait que le commutateur d'allumage est décommuté.

3. Procédé selon l'une des revendications 1 ou 2, **caractérisé par** la libération du frein anti-recul en réponse au fait que la pédale d'accélérateur est activée.

4. Agencement pour commander un frein anti-recul (1) dans un véhicule, qui est muni d'un premier capteur (2) pour capter la vitesse du véhicule, d'un deuxième capteur (3) pour capter la rotation par minute de l'arbre de sortie de la boîte de vitesses du véhicule, d'un troisième capteur (4) pour capter la pression de freinage et d'un quatrième capteur (5) pour capter la position de la pédale d'accélérateur, dans lequel les capteurs (2, 3, 4, 5) sont reliés à une unité de commande (7) qui est agencée pour activer le frein anti-recul (1) en réponse au fait que la vitesse est égale à une vitesse prédéterminée, que la rotation par minute est égale à une rotation par minute prédéterminée, que la pression de freinage est égale à une pression de freinage prédéterminée et que la pédale d'accélérateur est inactive,
**caractérisé en ce que** l'unité de commande (7) est agencée pour activer le frein anti-recul (1) après un retard prédéterminé.

5. Agencement selon la revendication 4, **caractérisé en ce que** le véhicule est muni d'un cinquième capteur (6) pour capter la position du commutateur d'allumage et **en ce que** le cinquième capteur (6) est relié à l'unité de commande (7) qui est agencée pour maintenir le frein anti-recul (1) activé en réponse à une décommutation du commutateur d'allumage.

6. Agencement selon l'une quelconque des revendications 4 ou 5, **caractérisé en ce que** l'unité de commande est agencée pour libérer le frein anti-recul en réponse à l'activation de la pédale d'accélérateur.

7. Programme informatique pour commander un frein anti-recul (1) dans un véhicule avec un moyen de code apte à être utilisé par ordinateur pour provoquer qu'une unité de traitement centrale (76) dans le véhicule détecte la vitesse du véhicule, la rotation par minute de l'arbre de sortie de la boîte de vitesses, la pression de freinage et la position de la pédale d'accélérateur pour activer le frein anti-recul (1) en réponse au fait que la vitesse est égale à une vitesse prédéterminée, que la rotation par minute est égale à une rotation par minute prédéterminée, que la pression de freinage est égale à une pression de freinage prédéterminée et que la pédale d'accélérateur est inactive, **caractérisé en ce que** le moyen de code apte à être utilisé par ordinateur provoque que l'unité de traitement centrale (76) active le frein anti-recul (1) après un retard prédéterminé.

8. Programme informatique selon la revendication 7, **caractérisé en ce que** le moyen de code apte à être utilisé par ordinateur provoque que l'unité de traitement centrale (76) dans le véhicule détecte la position du commutateur d'allumage et maintienne le frein anti-recul (1) activé en réponse à la décommutation du commutateur d'allumage.

9. Programme informatique selon l'une quelconque des revendications 7 ou 8, **caractérisé en ce que** le moyen de code apte à être utilisé par ordinateur provoque que l'unité de commande centrale (76) dans le véhicule libère le frein anti-recul (1) en réponse à l'activation de la pédale d'accélérateur.
